# EUROPEAN PATENT SPECIFICATION

(11) **EP 3 140 535 B1**
(45) Date of publication and mention of the grant of the patent: **14.11.2018**
(21) Application number: 15722558.2
(22) Date of filing: 29.04.2015
(51) Int. Cl.: F02D 41/40, F02D 19/06, F02D 19/10, F02D 19/08, F02D 41/00

(54) **METHOD IN CONTROLLING A DUAL FUEL ENGINE**
VERFAHREN ZUR STEUERUNG EINES ZWEIBRENNSTOFFMOTORS
MÉTHODE DE COMMANDE D'UN MOTEUR À DEUX CARBURANTS

(30) Priority: 09.05.2014 FI 20145428
(43) Date of publication of application: 15.03.2017
(73) Proprietor: Wärtsilä Finland Oy, 65100 Vaasa (FI)
(72) Inventor: NORDMAN, Vesa, 65100 Vaasa (FI); AXELSSON, Martin, 65100 Vaasa (FI); ÖSTMAN, Jonas, 65100 Vaasa (FI)
(74) Representative: Berggren Oy, Helsinki & Oulu
(86) International application number: PCT/FI2015/050293
(87) International publication number: WO 2015/170003

(56) References cited:
- EP-A1- 2 562 399

## Description

### TECHNICAL FIELD

The invention concerns in general the technology of internal combustion engines, such as large dual fuel engines. In particular the invention concerns the way in which the fuel feed is controlled during and immediately after changes in operating conditions.

More precisely, the invention concerns a method in controlling a dual fuel internal combustion four-stroke piston engine according to independent claim 1.

### BACKGROUND OF THE INVENTION

In dual fuel engines there are situations where the engine needs to swap from using one fuel to another fuel. This may happen due to several factors and it can be intended or unintended, depending on the running conditions. These may be very short in time or more temporary in length, they may be called as trips or switch to back up mode or similar. Basically the transition of fuel needs to be as smooth as possible, especially if the engine is running for electric power to an electric power network. Thus the power of the engine need to be maintained at a very constant level, thus the torque and the speed of the engine may not vary.

Most of the state of the art documents discloses some kind of ramp up procedure like WO2011098077 A1, which describes a method for switching the fuel supply to an internal combustion engine from a first fuel to a second fuel, comprising the steps of
operating the internal combustion engine using the first fuel,
b) lowering the fraction of the first fuel in the fuel line supplying the internal combustion engine and increasing the fraction of the second fuel in the fuel line supplying the internal combustion engine,
c) operating the internal combustion engine using a fuel mixture comprising the first fuel and the second fuel, and
d) repeating the steps b) and c) until the internal combustion engine is operated only using the second fuel, characterized by the steps of determining the flow rate of the first fuel in the line conducting the first fuel and/or determining the flow rate of the second fuel in the line conducting the second fuel and adjusting the fraction of the first fuel and the fraction of the second fuel in the fuel mixture based on the flow rate of the first fuel and/or second fuel.

Furthermore, the quantity of the fuel can be taken into account when a transition of fuels is executed.

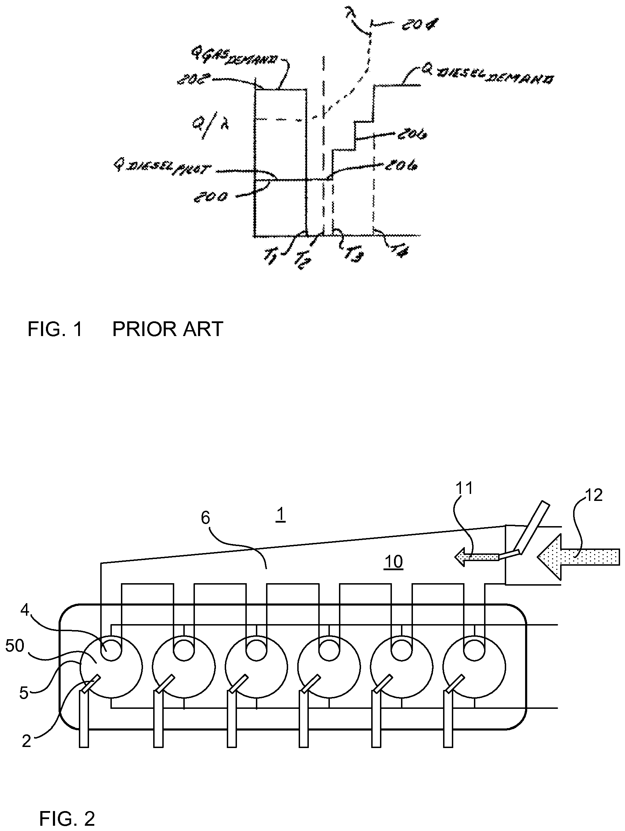

US 7,913,673 discloses a process for transitioning from pilot mode to diesel-only mode (as shown here in FIG. 1). This document describes that an engine operation is monitored on a cycle-by-cycle basis to determine whether the actual gas lambda, represented by curve 204, is approaching the lean lambda limit. When this occurs at time T₁ in FIG. 1, the gas supply to the mixer 42, represented by curve 202, is shut off to reduce the quantity of supplied gas immediately from Q_{GAS.sub.DEM} to 0. The supplied quantity of diesel fuel, represented by curve 200, is subsequently increased from Q_{DIESEL.sub.PILOT} to an increased quantity Q_{DIESEL.sub.DEM} that provides the demanded total energy for prevailing speed and load conditions. However, as with the transition from pilot operation to diesel-only operation, the change in the quantity of supplied diesel fuel is delayed and then changes in increments or stepwise rather than all at once. The delay and initial increase, followed by the stepwise increase, are effected in recognition of the fact that some gas remains present in the supply system, particularly within the intake manifold 34, for a time after the gas supply to the mixer 40 is shut off, and it is desirable to delay and then phase-in the diesel fuel increase in order to avoid power surges. More preferably, in order to prevent or at least reduce power surges, the increase in diesel fuel supply quantity is delayed to a time T₃ that occurs after the lean limit of gas lambda is reached at time T₂. As with the pilot to diesel-only transition, the length of the delay period T₃-T₁, the number of steps in the consequent transition period T₄-T₃, and the magnitude of each step are determined empirically on a full-speed, full-load basis with the goal of maintaining generally constant power and stored in a map or lookup table in the controller 70.

### SUMMARY OF THE INVENTION

In a situation where a trip or other shift from the gas mode to the liquid mode occurs on a running engine, the liquid fuel is injected during a combustion stroke after the piston has passed the top dead center (TDC) when the piston is already moving towards the bottom dead center (BDC). This injected liquid fuel will ignite as a consequence of high temperature and pressure at the moment of injection and burn the gas already injected to the engine but it will not create excessive cylinder pressure and torque. As a result, the engine performs a smooth trip to liquid fuel such as diesel with stabile load and engine speed. This also prevents a possibility that unburned gas could exit to the outlet channel and possible cause a delayed combustion in the outlet channel. The injection should start earliest at the crank shaft angle of 0° which means the top dead center (TDC). The latest injection starting angle would in practice be about 25° after TDC. An injection started after that may be too late, the ignition may become unreliable. The engine control system can be triggered to perform the fuel mode transfer due to various reasons, such as due to knocking or other disturbance in combustion, an interference in monitoring systems or in gas feed, etc.. In this transfer of mode situation the gas feed to an inlet manifold is stopped immediately so that no new gas is let to flow in to the inlet manifold.

According to the invention the injection of the liquid fuel is started at crankshaft angle of 5° to 20 °after top dead center (TDC). This causes the combustion of liquid fuel to start at a moment when the piston is already clearly moving towards the bottom dead center (BDC). In a possible case where the gas feed would still be 100% and the liquid feed also at 100% amount, a too close to the top dead center injected liquid fuel combustion could cause an excessive pressure rise but it depends on various factors of the engine. With the injection at about 5° after the top dead center (TDC) the pressure rise would not be too much. It would yet cause significant temperature rise, but it would be so short in time that the temperature rise is tolerable.

With the present method even the engine emissions stay in relatively low level. The possible gas residual get burned and also the first injections of liquid fuel get burned. As a result the HC emission is low compared to a situation where the unburned gas would exit the engine.

Still according to the invention, the quantity of said liquid fuel to be injected is determined as the energy content to be substantially the same as the energy content of gaseous fuel feed required for the combustion of present running state. So contrary to the teaching of the state of art documents where number of incremental steps are being used to build up the full feed, with the present invention the quantity of the liquid feed is right from the beginning of the mode change substantially the full 100% or at least 90% of the need. The feed can be calculated or determined as the energy content of one injected feed and it is dependable on the fuel grade used etc.

According to an embodiment of the invention, after a transition period of 1 to 10 cycles the injection of liquid fuel is advanced to begin on the compression stroke before the piston has reached the top dead center, at the crankshaft angle of 20° to 5° before top dead center (TDC). The end result of this advancing action corresponds to the normal running mode of the engine on the liquid fuel mode. As apparent with the number of cycles presented here, the present method provides a very fast and reliable way to transfer from the gas mode to the liquid mode.

### BRIEF DESCRIPTION OF THE DRAWINGS

Fig. 1 illustrates a prior art method from US 7,913,673,
Fig. 2 illustrates an embodiment of engine configuration for present concept,
Fig. 3 illustrates an embodiment of the present concept,
Fig. 4 illustrates a situation after the present method has been performed.

### DETAILED DESCRIPTION OF EMBODIMENTS OF THE INVENTION

In Fig. 1 it is presented the idea how the mode transfer is to be conducted according to US 7,913,673. This is already explained above, at the background of the invention.

In Fig. 2 it is presented a schematic engine construction where the present method can be used. Fig. 2 presents a common rail dual fuel engine 1 wherein the pilot fuel injector 2 and the main liquid fuel injector 2 are the same. The same method works also when the main and pilot injectors are not the same, so the principle works also on a conventional dual fuel system with jerk pumps and pilot injectors (not shown in figures). In gas mode gas 11 is premixed with air 12 in an inlet manifold 6 to form the gas 10 to be fed in to a cylinder 5. Thus when in operation in the gas mode, the inlet manifold 6 contains certain amount of that gas 10 mixture and in the liquid fuel mode the inlet manifold contains only air. The gas feed 10 to the cylinder 5 is controlled by inlet valves 4. That is why the gas 10 feed is not that precise to stop or start if compared to a liquid fuel 20 injection directly in to the cylinder 5. As the Fig. 2 presents a top view of the engine 1, it is to be understood that the engine 1 comprises a number of cylinders 5 each comprising a cylinder head and a cylinder wall, a piston 50 is movable in a reciprocating manner between a top dead center (TDC) and a bottom dead center (BDC) inside the cylinder 5 defining a combustion chamber. The piston 50 is connected via a connecting rod to a crankshaft, wherein the reciprocating movement of the piston is converted to a rotating movement of the crankshaft.

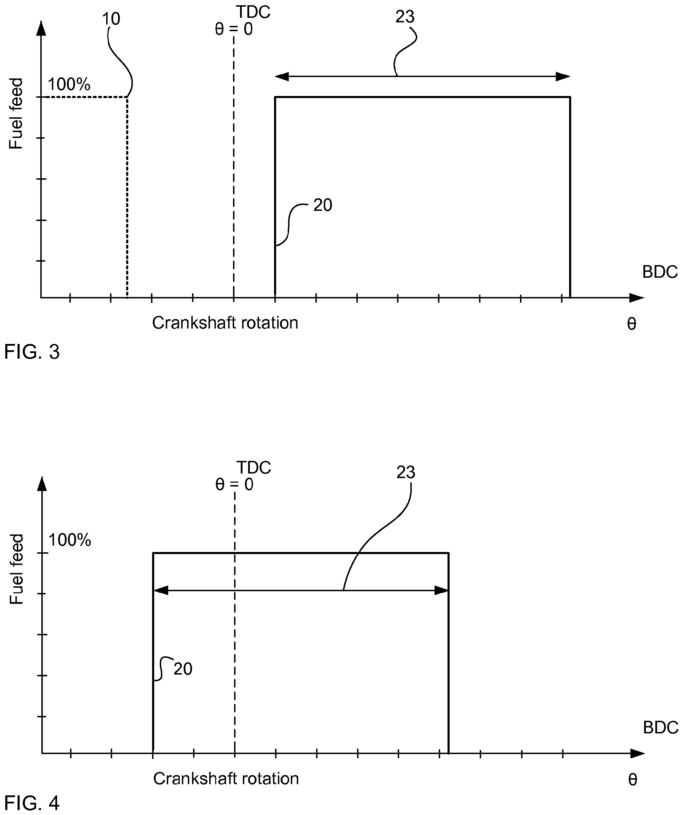

In Fig. 3 it is presented an embodiment of the present method. The engine crankshaft angle is presented on a horizontal axis and the zero point θ = 0° corresponds to the top dead center (TDC) position of the piston in between a compression stroke and a combustion stroke. The figure 3 illustrates a situation where the engine 1 runs at 1000 RPM and 1 millisecond in time corresponds 6° in crankshaft angle. The fuel injection is 6 milliseconds in length, thus corresponding 36° in crankshaft angle, as arrow 23 illustrates.

The method in controlling a dual fuel internal combustion four-stroke piston engine 1 is illustrated as how the engine 1 is configured to operate in two modes, Fig. 2 presents especially the fuel injection timing principles in response to the crankshaft angle:
- a gas mode for using gaseous main fuel 10 and possibly liquid fuel as a pilot fuel, and
- a liquid fuel mode for using liquid fuel 20 injected directly to the cylinder,
- the engine is configured to switch between the modes when needed,
- the fuel feed timing is configured to be performed as a function of the crankshaft rotation angle,
- in a situation where a trip or other shift from the gas mode to the liquid mode occurs on a running engine, the liquid fuel 20 is injected during a combustion stroke after the piston has passed the top dead center (TDC) when the piston is already moving towards the bottom dead center (BDC). The gas feed 10 is shown to end at some point before TDC and it takes for a while to travel within the inlet manifold to the cylinder. As said earlier, some irregularities, like sudden change in the gas pressure etc. may cause a trip to liquid fuel mode. However as in normal running situation gas is injected to the inlet manifold at 360° before the top dead center (TDC) and the liquid fuel is injected to the cylinder at 15° before TDC. If the trip occurs between these two, the engine would get double amount of fuel. The present method will reduce the consequences of this happening to minimum while still maintaining the speed and torque of the engine at very constant level. The quantity of the liquid feed is right from the beginning of the mode change substantially the full 100% or at least 90% of the need.

In fig. 4 it is presented that after a transition period of 1 to 10 cycles the injection of liquid fuel 20 is advanced to begin on the compression stroke before the piston has reached the top dead center TDC, at the crankshaft angle of 20° to 5° before top dead center (TDC). Thus the liquid fuel is injected so that the injection starts as it would normally do in a liquid fuel mode. The number of cycles before advancing action is determined on the basis of a response time of the actual engine, depending on the configuration of the engine intake receiver and the amount of gas possibly containing in said intake receiver.

Variations and modifications to the embodiments described above are possible without departing from the scope of the amended claims. For example, instead of calculated fuel demand, the liquid fuel amount can be determined from the engine load, cylinder pressure (e.g calculated IMEP) or other signals indicative of the operating state e.g. start of combustion.

### REFERENCE SIGNS USED IN FIGURES

- 1: engine
- 10: gas feed
- 11: gas
- 12: air
- 2: liquid fuel injector (pilot or main)
- 20: liquid fuel feed
- 23: length of main liquid fuel injection
- 4: inlet valve
- 5: cylinder
- 50: piston
- 6: inlet manifold
- TDC: top dead center
- BDC: bottom dead center
- θ: crankshaft angle

## Claims

1. A method in controlling a dual fuel internal combustion four-stroke piston engine (1) comprising
- a number of cylinders (5) each comprising a cylinder head and a cylinder wall, a piston (50) is movable in a reciprocating manner between a top dead center (TDC) and a bottom dead center (BDC) inside the cylinder (5) defining a combustion chamber,
- the piston (50) is connected via a connecting rod to a crankshaft, wherein the reciprocating movement of the piston (50) is converted to a rotating movement of the crankshaft,
- the engine (1) is configured to operate in two modes:
- a gas mode for using gaseous main fuel (10), and
- a liquid fuel mode for using liquid fuel (20) injected directly to the cylinder (5),
- the engine (1) is configured to switch between the modes when needed,
- the fuel feed timing is configured to be performed as a function of the crank shaft rotation angle,
**characterized in that**
- in a situation where a trip or other shift from the gas mode to the liquid mode occurs on a running engine (1), during a transition period the liquid fuel (20) is injected during a combustion stroke after the piston (50) has passed the top dead center (TDC) when the piston (50) is already moving towards the bottom dead center (BDC) so that the injection of the liquid fuel is started at crankshaft angle of 5° to 20° after top dead center (TDC), and during the transition period the quantity of said liquid fuel to be injected is determined as the energy content to be at least 90 % of the energy content of gaseous fuel feed required for the combustion of present running state.

2. The method according to claim 1, **characterized in that** during the transition period the quantity of said liquid fuel to be injected is determined as the energy content to be substantially the same as the energy content of gaseous fuel feed required for the combustion of present running state.

3. The method according to claim 1, **characterized in that** in a situation where a trip or other shift from the gas mode to the liquid mode occurs on a running engine (1), after a transition period of 1 to 10 cycles the injection of liquid fuel is advanced to begin on the compression stroke before the piston has reached the top dead center.

4. The method according to claim 1, **characterized in that** in a situation where a trip or other shift from the gas mode to the liquid mode occurs on a running engine (1), after a transition period of 1 to 10 cycles the injection of liquid fuel is advanced to begin on the compression stroke before the piston has reached the top dead center, at the crankshaft angle of 20° to 5° before top dead center (TDC).

5. The method according to claim 4, **characterized in that** the number of cycles before advancing action of the injection of liquid fuel is determined on the basis of a response time of the actual engine, depending on the configuration of the engine intake receiver and the amount of gas possibly containing in said intake receiver.

6. The method according to claim 2, **characterized in that** during the transition period the quantity of the liquid feed is right from the beginning of the mode change substantially the full 100% or at least 90% of the need.

## Patentansprüche

1. Verfahren beim Steuern einer Zweibrennstoff-Viertakt-Verbrennungskraftmaschine (1), umfassend
- eine Anzahl von Zylindern (5), wobei jeder einen Zylinderkopf und eine Zylinderwand umfasst, ein Kolben (50) ist in einer hin- und hergehenden Weise zwischen einem oberen Totpunkt (TDC) und einem unteren Totpunkt (BDC) innerhalb des Zylinders (5) beweglich, der eine Verbrennungskammer definiert,
- der Kolben (50) ist über eine Pleuelstange mit einer Kurbelwelle verbunden, wobei die hin- und hergehende Bewegung des Kolbens (50) in eine Drehbewegung der Kurbelwelle umgewandelt wird,
- die Maschine (1) ist dafür ausgelegt, in zwei Modi zu arbeiten:
- in einem Gasmodus zur Verwendung von gasförmigem Hauptkraftstoff (10), und
- in einem Flüssigkraftstoff-Modus zur Verwendung von flüssigem Kraftstoff (20), der direkt in den Zylinder (5) eingespritzt wird,
- der Motor (1) ist dafür ausgelegt, zwischen den Modi umzuschalten, falls erforderlich;
- der Zeitablauf der Kraftstoffzufuhr ist dafür ausgelegt, als Funktion des Kurbelwellen-Drehwinkels ausgeführt zu werden,
**dadurch gekennzeichnet, dass**
- in einer Situation, wo ein Trip oder eine andere Umstellung vom Gasmodus zum Flüssigkeitsmodus bei einer laufenden Maschine (1) auftritt, während einer Übergangsperiode der flüssige Kraftstoff (20) während eines Verbrennungshubs eingespritzt wird, nachdem der Kolben (50) den oberen Totpunkt (TDC) passiert hat, wenn sich der Kolben (50) bereits in Richtung auf den unteren Totpunkt (BDC) bewegt, sodass die Einspritzung des flüssigen Kraftstoffs bei einem Kurbelwellenwinkel von 5° bis 20° nach dem oberen Totpunkt (TDC) beginnt, und während der Übergangsperiode wird die Menge des flüssigen Kraftstoffs, der eingespritzt werden soll, als der Energiegehalt bestimmt, der mindestens 90 % des Energiegehaltes der Gaskraftstoffzufuhr betragen soll, der für die Verbrennung des aktuellen laufenden Zustandes erforderlich ist.

2. Verfahren nach Anspruch 1, **dadurch gekennzeichnet, dass** während der Übergangsperiode die Menge des flüssigen Kraftstoffs, die eingespritzt werden soll, als der Energiegehalt bestimmt wird, der im Wesentlichen derselbe wie der Energiegehalt der Gaskraftstoffzufuhr ist, der für die Verbrennung im aktuellen laufenden Zustand benötigt wird.

3. Verfahren nach Anspruch 1, **dadurch gekennzeichnet, dass** in einer Situation, in der ein Trip oder eine andere Umstellung vom Gasmodus zum Flüssigkeitsmodus bei einer laufenden Maschine (1) auftritt, die Einspritzung von flüssigem Kraftstoff nach einer Übergangsperiode von 1 bis 10 Zyklen vorangebracht wird, um beim Kompressionshub zu beginnen, bevor der Kolben den oberen Totpunkt erreicht hat.

4. Verfahren nach Anspruch 1, **dadurch gekennzeichnet, dass** in einer Situation, in der ein Trip oder eine andere Umstellung vom Gasmodus zum Flüssigkeitsmodus bei einer laufenden Maschine (1) auftritt, nach einer Übergangsperiode von 1 bis 10 Zyklen die Einspritzung von flüssigem Kraftstoff vorangetrieben wird, um beim Kompressionshub zu beginnen, bevor der Kolben den oberen Totpunkt erreicht hat, beim Kurbelwellenwinkel von 20° bis 5° vor dem oberen Totpunkt (TDC).

5. Verfahren nach Anspruch 4, **dadurch gekennzeichnet, dass** die Zahl der Zyklen vor der fortschreitenden Aktion des Einspritzens von flüssigem Kraftstoff auf der Basis einer Reaktionszeit der tatsächlichen Maschine bestimmt wird, abhängig von der Konfiguration der Maschinen-Aufnahmevorrichtung und der Menge von Gas, die möglicherweise in der Aufnahmevorrichtung enthalten ist.

6. Verfahren nach Anspruch 2, **dadurch gekennzeichnet, dass** während der Übergangszeit die Menge der Flüssigkeitszufuhr direkt vom Beginn der Modusänderung im Wesentlichen volle 100 % oder zumindest 90 % des Bedarfs beträgt.

## Revendications

1. Procédé de commande d'un moteur à pistons quatre temps à combustion interne bicarburant (1) comprenant
- un nombre de cylindres (5) comportant chacun une culasse et une paroi de cylindre, et un piston (50) déplaçable de manière alternative entre un point mort haut (TDC) et un point mort bas (BDC) à l'intérieur du cylindre (5) définissant une chambre de combustion,
- le piston (50) est connecté via une bielle à une manivelle, dans lequel le mouvement alternatif du piston (50) est converti en mouvement rotatif de la manivelle,
- le moteur (1) est configuré pour fonctionner dans deux modes :
- un mode gazeux pour utiliser un carburant principal gazeux (10), et
- un mode de carburant liquide pour utiliser un carburant liquide (20) injecté directement dans le cylindre (5),
- le moteur (1) est configuré pour commuter au besoin entre les modes,
- la synchronisation de l'alimentation de carburant est configurée pour être mise en oeuvre en fonction de l'angle de rotation de la manivelle,
**caractérisé en ce que**
- dans une situation où un voyage ou un autre passage du mode gazeux au mode liquide se produit sur un moteur en marche (1), durant une période de transition, le carburant liquide (20) est injecté durant une course de combustion après que le piston (50) est passé par le point mort haut (TDC) quand le piston (50) se déplace déjà vers le point mort bas (BDC) de telle sorte que l'injection du carburant liquide est démarrée à un angle de manivelle de 5° à 20° après le point mort haut (TDC), et durant la période de transition, la quantité dudit carburant liquide à injecter est déterminée de telle sorte que le contenu énergétique soit d'au moins 90 % du contenu énergétique de l'alimentation de carburant gazeux requis pour la combustion de l'état de fonctionnement actuel.

2. Procédé selon la revendication 1, **caractérisé en ce que** durant la période de transition, la quantité dudit carburant liquide à injecter est déterminée de telle sorte que le contenu énergétique soit substantiellement identique au contenu énergétique de l'alimentation de carburant gazeux requis pour la combustion de l'état de fonctionnement actuel.

3. Procédé selon la revendication 1, **caractérisé en ce que** dans une situation où un voyage ou un autre passage du mode gazeux au mode liquide se produit sur un moteur en marche (1), après une période de transition de 1 à 10 cycles, l'injection du carburant liquide est avancée pour commencer sur la course de compression avant que le piston n'ait atteint le point mort haut.

4. Procédé selon la revendication 1, **caractérisé en ce que** dans une situation où un voyage ou un autre passage du mode gazeux au mode liquide se produit sur un moteur en marche (1), après une période de transition de 1 à 10 cycles, l'injection du carburant liquide est avancée pour commencer sur la course de compression avant que le piston n'ait atteint le point mort haut, à un angle de manivelle de 20° à 5° avant le point mort haut (TDC).

5. Procédé selon la revendication 4, **caractérisé en ce que** le nombre de cycles avant l'action d'avancement de l'injection de carburant liquide est déterminé sur base d'un temps de réponse du moteur lui-même, en fonction de la configuration du collecteur d'admission du moteur et de la quantité de gaz éventuellement contenue dans ledit collecteur d'admission.

6. Procédé selon la revendication 2, **caractérisé en ce que** durant la période de transition, la quantité d'alimentation liquide est dès le début du changement de mode substantiellement égale à 100 % ou à au moins 90 % de la quantité demandée.
